# EUROPEAN PATENT APPLICATION

(11) **EP 1 941 986 A1**
(43) Date of publication of application: **09.07.2008**
(21) Application number: 06790978.8
(22) Date of filing: 13.09.2006
(51) Int. Cl.: B29C 47/20, B29C 47/04

(54) **DIE FOR FILM-BLOWING MACHINE AND THE MACHINE INCLUDING SUCH DIE**

(30) Priority: 29.09.2005 CN 200510108141
(71) Applicant: Li, Xiaolu, Beijing 100036 (CN)
(72) Inventor: Li, Xiaolu, Beijing 100036 (CN)
(74) Representative: Rees, David Christopher
(86) International application number: PCT/CN2006/002368
(87) International publication number: WO 2007/036137

(57) **Abstract**

A die for film-blowing machine and the machine including such die. The die comprises a main body, an annular port mold and a central bore. The main body of the die comprises feed openings and a main flow channel which is located in the main body of the die and interconnects the feed opening and annular port mold. There are many feed openings, and each of them connects to one or more main flow channel. The main flow channel connected with different feed openings connects to different regions of the annular port mold. The regions distribute along the circumferential direction of the annular port mold, and the cross section of the regions is a fan link shape. The film-blowing machine includes the above die and several screw extruders. The mulching film made by the machine consists of at least two different materials which locate in the film side by side.

## Description

### [Field of the Invention]

The present invention relates to a plastic processing machine, and more particularly to a die for film-blowing machine and a film-blowing machine including such a die.

### [Background of the Invention]

In recent years, as white agriculture develops further, the production of various agricultural mulching films booms quickly. Due to the fact that the different crops have different vegetative cycles and different requirements for visible light for photo-synthesis, they require different agricultural mulching films that have different heat preservation and soil moisture preservation capabilities, different degradation cycles, and different permeability capabilities to different rays. For example, for planting eggplant, the purple mulching film or black mulching film can suppress weed growth; while the silver mulching film can protect from diseases and pests. In addition, since during planting crops the different crops are planted in different planting manners (e.g., in some cases, the different crops must be planted on the adjacent and separated ridges, and these crops require different heat preservation and soil moisture preservation capabilities, different degradation capabilities, and different permeability capabilities to different rays, depending on their growth rhythm. However, the traditional mulching films are usually homogeneous in composition on entire sheet; therefore, the different planting ridges must be covered with the different mulching films separately to meet the demands of different crops; as a result, the mulching film laying work consumes manpower, time and cost heavily.

### [Summary of the Invention]

An object of the present invention is to provide a die for film-blowing machine, which can be used to produce a mulching film that consists of at least two strips made of different components. Another object of the present invention is to provide a film-blowing machine including such a die.
The die for film-blowing machine according to the present invention comprises a main body, an annular die port fitted to the main body, and a central hole running through the main body and the annular die port, the main body comprises feed ports and main flow channels that are located inside the main body for communicating the feed ports with the annular die port; wherein, a plurality of feed ports is arranged, and each of feed ports is communicated with one or more main flow channels; the main flow channels communicated with the different feed ports are communicated with different regions of the annular die port; the regions are distributed in the circumferential direction of the annular die port, and the cross sections of the regions are in shapes of sectorial annularity.
The film-blowing machine according to the present invention comprises a die and a plurality of screw extruders. The screw extruder comprises a drive unit, a feeding unit, an extruding screw, and a discharge port. The die comprises a main body, an annular die port fitted to the main body, and a central hole running through the main body and the annular die port, the main body comprises feed ports and main flow channels that are located inside the main body for communicating the feed ports with the annular die port; wherein, a plurality of feed ports is arranged, and each of feed ports is communicated with one or more main flow channels; the main flow channels communicated with the different feed ports are communicated with different regions of the annular die port; the regions are distributed in the circumferential direction of the annular die port, and the cross sections of the regions are in shapes of sectorial annularity. One feed port of the die is communicated with the discharge port of one screw extruder.
In the die for film-blowing machine according to the present invention, since there are a plurality of material flow channels communicated with the screw extruders, and the material flow channels are not communicated therebetween, so that the materials in different compositions respectively fed by the plurality of screw extruders can be extruded from at least one region of the annular die port located at the end of the die respectively. Since all the regions of the entire annular die port are filled with the materials in different compositions finally, these materials can be extruded and blown from the annular die port to form a cylindrical film that consists of a plurality of strips, and each of the strips contains chemical compositions suitable for the different crops. Especially, when two materials in different compositions are fed, each material will be extruded from two alternated regions of the annular die port. Therefore, the cylindrical film formed by extrusion will be consist of four strips, and each two alternated strips among the four strips are in the same composition, i.e., ultimately a mulching film in ABA form can be produced. Therefore, when such a special agricultural mulching film produced by the film-blowing machine according to the present invention is used to cover a plurality of continuously alternated planting ridges in which the different crops are planted, the operator can simply cover the entire mulching film on the plurality of planting ridges in one operation, so that the present invention can avoid the trouble of covering different planting ridges with separate mulching films, and thereby can save labor and time.

### [Brief Description of the Drawings]

Fig.1 is an axial section view of the die for film-blowing machine according to the present invention;
Fig.2 is a schematic structural view of the film-blowing machine according to the present invention;
Fig.3 is a schematic structural view of the air ring in the film-blowing machine according to the present invention;
Fig.4 is a top view of the die for film-blowing machine according to the present invention;
Fig.5 is a schematic section view taken along a line A-A in Fig.4 of the die for film-blowing machine according to the present invention, wherein the central hole is not shown;
Fig.6 is a schematic section view taken along a line B-B in Fig.4 of the die for film-blowing machine according to the present invention, wherein the central hole is not shown; and
Fig.7 is a schematic section view taken along a line C-C in Fig.5 of the die for film-blowing machine according to in the present invention.

### [Detailed Description of the Embodiments]

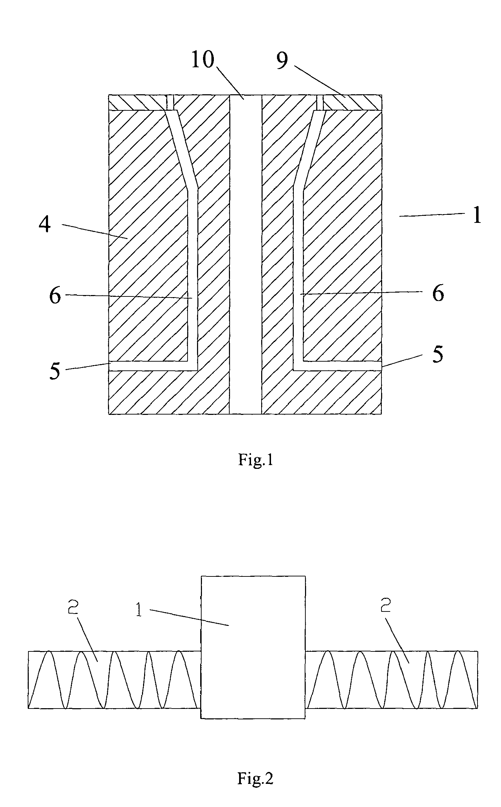

Hereunder the present invention will be further described in detail with reference to the accompanying drawings.
The die 1 for film-blowing machine according to the present invention comprises a main body 4, an annular die port 9, and a central hole 10, wherein the main body 4 is formed with feed ports 5 and main flow channels 6, as shown in Fig.1.
Wherein, the main body 4 can be fabricated into a variety of cylindrical shapes, preferably the main body 4 is in a shape of cylinder, and the dimensions thereof can be determined according to the specific demand.
The annular die port 9 is located at the end of the die, and is designed to extrude the materials along an annular shape for plasticizing and forming. The annular die port 9 is fitted to the main body 4. The annular die port 9 is in a certain depth, usually equal to 1/150-1/10 of the height of the main body 4, preferably equal to 1/50-1/30 of the height of the main body 4. The port clearance of the annular die port 9 is usually at 0.3-3mm, preferably 0.7-1.2mm.
The central hole 10 is located at the center of the annular die port 9, and runs through the main body 4 and the annular die port 9 along the central axis of the die, so as to transfer air. When the material is extruded through the annular die port 9, a great deal of air transferred by the central hole will be blown out through the center of the annular die port 9, so that the material will be formed into a film in a cylindrical shape by blow molding. The diameter of the central hole 10 can be determined as required on the premise that it is smaller than the inner diameter of the annular die port 9, as long as the diameter can meet the requirement for supplying enough air.
The feed ports 5 can be located at any position on the periphery of the main body 4, preferably the feed ports 5 are located at the middle and lower positions on the periphery of the main body 4. The shape and dimensions of the feed ports can be determined as required, as long as they can ensure smooth material inflow. Usually, a plurality of feed ports is arranged, so that a plurality of materials in different compositions can be flowed into the main body. Preferably, 2-6 feed ports are arranged.
The main flow channels 6 are located inside the main body 4, wherein, one end of each main flow channel is communicated with the feed port, and the other end thereof is communicated with the annular die port, so as to transfer the material that flows into the main body through the feed port to the annular die port. A plurality of main flow channels 6 is arranged, so as to transfer materials in different compositions from the different feed ports respectively. The main flow channels may be in curved fan shape or tubular shape.
Usually, each feed port is communicated with one or more main flow channels; the main flow channels communicated with the different feed ports are communicated with different regions of the annular die port, and the regions are distributed in the circumferential direction of the annular die port, and the cross sections of the regions are in shapes of sectorial annularity. The cross sectional area of each region of the annular die port is usually no greater than 90% of the cross sectional area of the entire annular flow channel, preferably no greater than 50%, more preferably in a range of 5-50%. The main flow channels communicated with the same feed port may be communicated with the same region of the annular die port. Preferably, the main flow channels communicated with the same feed port may be communicated with the different regions of the annular die port. In an embodiment of the present invention, the main flow channels communicated with the same feed port are communicated with the different regions of the annular die port, and the regions of the annular die port communicated with the main flow channels that communicated with the different feed ports are arranged alternately.
Preferably, the die 1 for film-blowing machine according to the present invention further comprises an annular flow channel 8 located within the upper of the main body 4. The annual flow channel 8 is located between the main flow channels and the annular die port, and is designed to force the materials to be distributed along an annular shape before the materials enter into the annular die port 9. The inner and outer diameters of the annular flow channel 8 can be determined as required. In addition, the annular flow channel 8 is in a certain depth, so as to facilitate the melt materials to be dispersed smoothly and evenly during transferring upward and enable the materials on the border between different materials mixed fully. Usually, the depth of the annular flow channel is 0-1/2 of the total height of the main body, preferably 1/20-1/4.
In the preferred case, the main flow channels communicated with the different feed ports are communicated with the different regions of the annular flow channel, and the regions are distributed in the circumferential direction of the annular flow channel, and the cross sections of the regions are in shapes of sectorial annularity. The cross sectional area of each different region of the annular flow channel is usually no greater than 90% of the cross sectional area of the entire annular flow channel, preferably no greater than 50%, more preferably within a range of 5-50%. The main flow channels communicated with the same feed port may be communicated with the same region of the annular flow channel. Preferably, the main flow channels communicated with the same feed port may be communicated with the different regions of the annular flow channel. In an embodiment of the present invention, the main flow channels communicated with the same feed port are communicated with the different regions of the annular flow channel, and the regions of the annular flow channel communicated with the main flow channels that communicated with the different feed ports are arranged alternately.
In addition, the regions of the annular flow channel are corresponding to the regions of the annular die port; the main flow channels communicated with the different feed ports are communicated with the different regions of the annular die port through the annular flow channel, so that the different materials in the different regions of the annular flow channel can be extruded out from the corresponding regions of the annular die port. In the case that there is no annular flow channel, the materials in melt state will be transferred directly into the annular die port and perform dispersing, mixing on the borders, and plasticizing and extrusion therein. In the preferred case that the annular flow channel is available, the materials in melt state will be dispersed smoothly and evenly in the annular flow channel and mix fully with each other on the borders, while the annular die port is only used for plasticizing and extrusion of the materials. In that case, the port clearance of the annular die port must be smaller than the width of the annular flow channel.
Preferably, the die 1 for film-blowing machine according to the present invention further comprises branch flow channels 7 located within the main body 4. The branch flow channels 7 are communicated the main flow channels with the annular die port, or are communicated the main flow channels with the annular flow channel. By adding the branch flow channels, the materials can be dispersed more evenly in the annular die port or the annular flow channel. Usually, each main flow channel may be communicated with one or more branch flow channels. If the main flow channels are tubular flow channels, the branch flow channels communicated with the main flow channels may be in curved fan shape or tubular shape.
The branch flow channels communicated with the same feed port may be communicated with the same region of the annular die port or annular flow channel. Preferably, the branch flow channels communicated with the same feed port may be communicated with the different regions of the annular die port or annular flow channel. In an embodiment of the present invention, the branch flow channels communicated with the same feed port are communicated with the different regions of the annular die port or annular flow channel, and the regions of the annular die port or annular flow channel communicated with the branch flow channels that communicated with the different feed ports are arranged alternately.

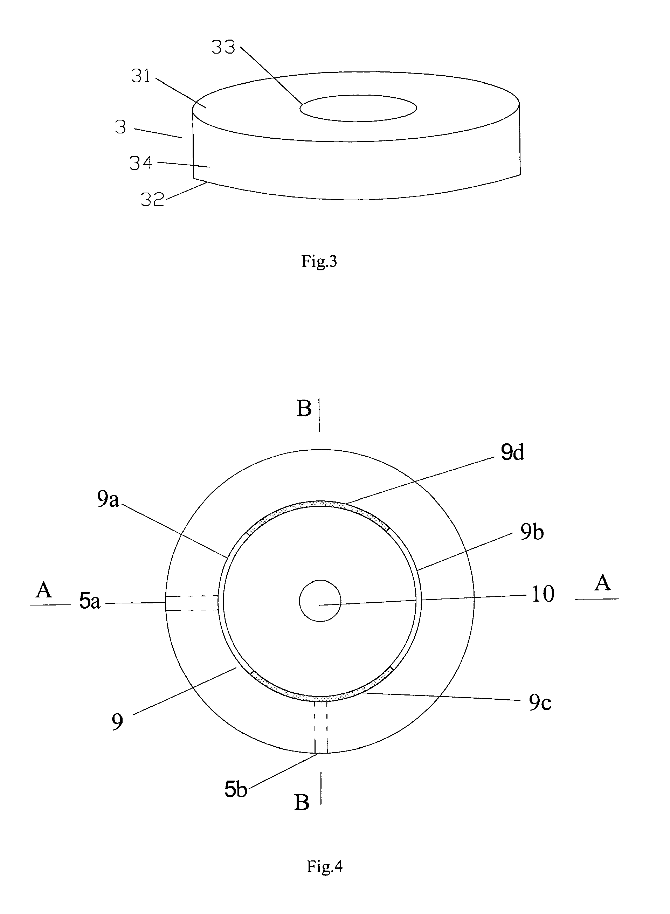

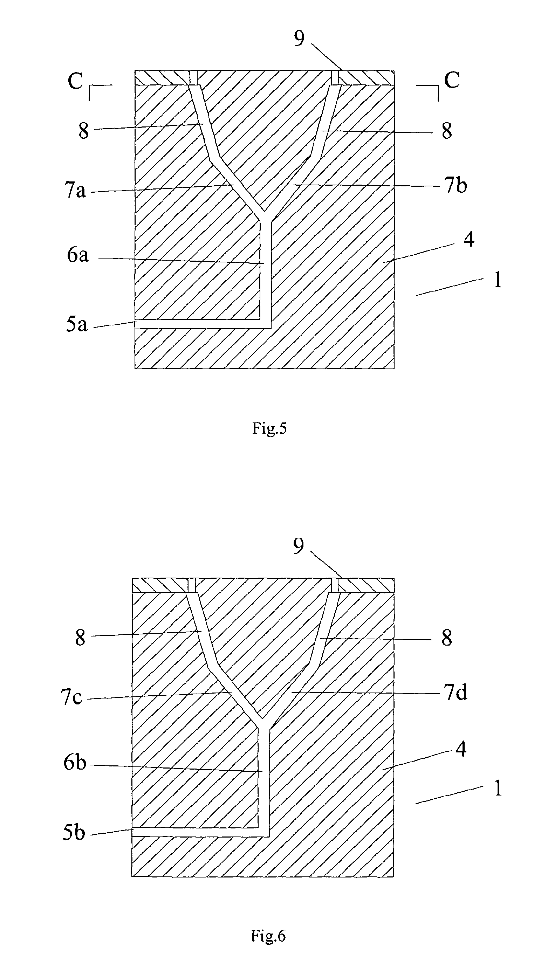

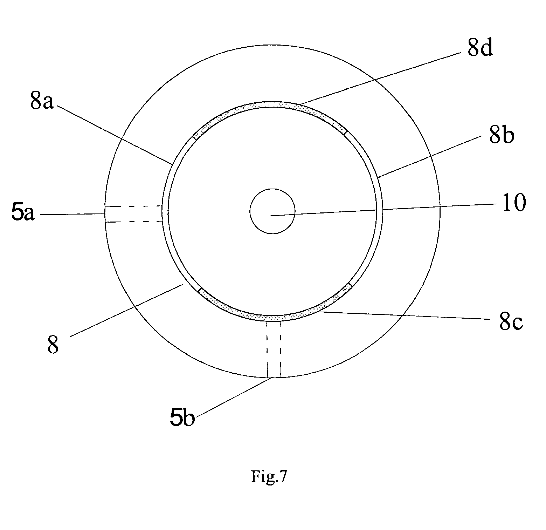

It is noted here: there is no physical border between the different "regions" of the annular die port or annular flow channel; the "regions" of the annular die port or annular flow channel refer to one or more regions to which the fluid transferred from one or more main flow channels or branch flow channels communicated with the feed ports to the annular die port or annular flow channel can be reached on the annular die port or annular flow channel.
The film-blowing machine according to the present invention comprises the die 1 according to the present invention and screw extruders 2, as shown in Fig.2. Wherein, the structure of the screw extruder 2 is well known to those skilled in the art, and comprises a drive unit, a feeding unit, an extruding screw, and a discharge port. The screw extruder can be any screw extruder known to those skilled in the art, such as a conical single screw extruder, a reciprocating single screw extruder, a conical co-directionally (and/or counter-directionally) double screws extruder, a co-directionally (and/or counter-directionally) parallel double screws extruder, or a co-directionally (and/or counter-directionally, modular) parallel double screws extruder, etc. The screw extruders can feed different materials. The number of screw extruders depends on the categories of materials required for producing the mulching film; however, at least two screw extruders must be used to feed at least two different materials to the die. For example, if two materials in different compositions must be fed to the die to produce a mulching film that consists of two strips in different compositions, two screw extruders must be used; if three materials in different compositions must be fed to the die to produce a mulching film that consists of three strips in different compositions, three screw extruders must be used, and so on. Preferably, 2-5 screw extruders are used. In addition, the discharge port of each screw extruder is communicated with one feed port of the die.
Preferably, the film-blowing machine according to the present invention further comprises an air ring 3. As shown in Fig.3, the air ring 3 comprises a top ring surface 31, a bottom ring surface 32, a cylindrical inner wall 33, and a cylindrical outer wall 34. Wherein, the diameter of the cylindrical inner wall 33 is greater than the diameter of the main body 4. At least one opening is formed in the bottom ring surface 32 to blow air into the air ring. Clearance is arranged around the circumference of the cylindrical inner wall 33, and the size of the clearance can be determined according to the required air power. The air ring 3 is fitted around the die 1. After a large quantity of air enters into the hollow air ring 3 through the openings in the bottom ring surface 32, the air will be blown out through the clearance around the circumference of the cylindrical inner wall 33.
Preferably, the film-blowing machine according to the present invention further comprises an air generator. The air generator is connected to the central hole 10 in the die and the openings in the bottom ring surface 32 of the air ring, and is designed to feed air to the central hole and the air ring. When the film-blowing machine is in use, the air blown out through the central hole 10 will be blown into the cylindrical material film extruded through the annular die port 9 in melt state, so as to blow the cylindrical material film to the required width at a blow-up ratio suitable for the material; at the same time, the air blown out through the clearance of the air ring 3 will cool the cylindrical material film extruded through the annular die port 9 to accomplish forming. The air generator may be any air generating device known to those skilled in the art, such as a blower, a compressed gas pump, etc.
In an embodiment of the present invention, the film-blowing machine according to the present invention comprises a die 1, two screw extruders 2a and 2b, an air ring 3, and an air generator. Wherein, the die 1 comprises a main body 4, an annular die port 9, and a central hole 10; the main body 4 comprises two feed ports 5a and 5b, two tubular main flow channels 6a and 6b, four curved fan-shaped branch flow channels 7a, 7b, 7c, and 7d, and an annular flow channel 8. The depth of the annular flow channel 8 is 1/10 of the total height of the main body 4. The annular flow channel 8 is divided into four regions 8a, 8b, 8c, and 8d, and the cross sectional area of each region is approximately 1/4 of the cross sectional area of the entire annular flow channel. The annular die port 9 is also divided into four regions 9a, 9b, 9c, and 9d, which are corresponding to the four regions of the annular flow channel 8 respectively; the cross sectional area of each region of the annular die port 9 is approximately 1/4 of the cross sectional area of the entire annular die port, as shown in Fig.4. The port clearance of the annular die port 9 is 1mm, and the depth of the annular die port 9 is 1/40 of the total height of the main body 4. The discharge ports of the two screw extruders 2a and 2b are communicated with the two feed ports 5a and 5b, respectively.
The two feed ports 5a and 5b in the die are located at the lower of the main body and at the same level (i.e., in the same horizontal plane); in addition, when two perpendicular lines are made from the two positions at which the two feed ports are respectively located towards the central axis of the main body, the two perpendicular lines are substantially perpendicular to each other in the horizontal plane, i.e., the two feed ports 5a and 5b are located at the positions perpendicular to each other, as shown in Fig.4.
As shown in Fig.5, Fig.6, and Fig.7, the feed port 5a is communicated with the tubular main flow channel 6a, the tubular main flow channel 6a is communicated with the two curved fan-shaped branch flow channels 7a and 7b, the curved fan-shaped branch flow channel 7a is communicated with the region 8a of the annular flow channel 8, and the curved fan-shaped branch flow channel 7b is communicated with the region 8b of the annular flow channel 8. The feed port 5b is communicated with the tubular main flow channel 6b, the tubular main flow channel 6b is communicated with two curved fan-shaped branch flow channels 7c and 7d, the curved fan-shaped branch flow channel 7c is communicated with the region 8c of the annular flow channel 8, and the curved fan-shaped branch flow channel 7d is communicated with the region 8d of the annular flow channel 8.
The material A extruded through the discharge port of the screw extruder 2a passes through the feed port 5a, the tubular main flow channel 6a, the curved fan-shaped branch flow channels 7a and 7b, is distributed to the regions 8a and 8b of the annular flow channel, and finally is extruded from the regions 9a and 9b of the annular die port 9. The material B extruded through the discharge port of the screw extruder 2b passes through the feed port 5b, the tubular main flow channel 6b, the curved fan-shaped branch flow channels 7c and 7d, is distributed to the regions 8c and 8d of the annular flow channel, and finally is extruded through the regions 9c and 9d of the annular die port 9. That is to say, the materials A and B respectively fed from the screw extruders 2a and 2b are extruded through the annular die port 9 in an alternated distributing manner, as shown in Fig.4. With the air blown out through the central hole 10 and the clearance of the air ring 3, the materials extruded through the annular die port 9 may be blown to the required width at blow-up ratios suitable for the materials, and the materials are cooled to form a cylindrical mulching film; in addition, the cylindrical mulching film is consist of four strips, wherein, among the four strips, each two alternated strips are in identical composition, i.e., the strips are made of two different materials A and B; therefore, a mulching film in ABA form can be produced ultimately.
In another embodiment of the present invention, the film-blowing machine according to the present invention comprises a die 1, three screw extruders 2a, 2b, and 2c, an air ring 3, and an air generator. Wherein, the die 1 comprises a main body 4, an annular die port 9, and a central hole 10; the main body 4 comprises three feed ports 5a, 5b, and 5c, three main flow channels 6a, 6b, and 6c, and an annular flow channel 8. The depth of the annular flow channel 8 is 1/9 of the total height of the main body 4. The annular flow channel 8 is divided into three regions 8a, 8b, and 8c, and the cross sectional area of each region is approximately 1/3 of the cross sectional area of the entire annular flow channel. The annular die port 9 is divided into three regions 9a, 9b, and 9c, which are corresponding to the three regions of the annular flow channel 8 respectively; the cross sectional area of each region of the annular die port 9 is approximately 1/3 of the cross sectional area of the entire annular die port. The port clearance of the annular die port 9 is 0.9mm, and the depth of the annular die port 9 is 1/38 of the total height of the main body 4. The discharge ports of the three screw extruders 2a, 2b, and 2c are communicated with the three feed ports 5a, 5b, and 5c, respectively.
The three feed ports 5a, 5b, and 5c in the die 1 are arranged at the lower of the main body and at the same level (i.e., in the same horizontal plane); in addition, when three perpendicular lines are made from the three positions at which the three feed ports are respectively located to the central axis of the main body, the perpendicular lines are substantially at 120 with respect to each other in the horizontal plane.
The feed port 5a is communicated with the curved fan-shaped main flow channel 6a, the main flow channel 6a is communicated with the region 8a of the annular flow channel 8. The feed port 5b is communicated with the curved fan-shaped main flow channel 6b, and the main flow channel 6b is communicated with the region 8b of the annular flow channel 8. The feed port 5c is communicated with the curved fan-shaped main flow channel 6c, and the main flow channel 6c is communicated with the region 8c of the annular flow channel 8.

The material A extruded through the discharge port of the screw extruder 2a passes through the feed port 5a, the curved fan-shaped main flow channel 6a, is distributed to the region 8a of the annular flow channel 8, and is extruded from the region 9a of the annular die port 9 finally. The material B extruded through the discharge port of the screw extruder 2b passes through the feed port 5b, the curved fan-shaped main flow channel 6b, is distributed to the region 8b of the annular flow channel 8, and is extruded from the region 9b of the annular die port 9 finally. The material C extruded through the discharge port of the screw extruder 2c passes through the feed port 5c, the curved fan-shaped main flow channel 6c, is distributed to the region 8c of the annular flow channel 8, and is extruded from the region 9c of the annular die port 9 finally. That is to say, the materials A, B, and C respectively fed from the screw extruders 2a, 2b, and 2c are extruded through the annular die port 9 in an alternated distributing manner. With the air blown out through the central hole 10 and the clearance of the air ring 3, the materials extruded through the annular die port 9 may be blown to the required width at blow-up ratios suitable for the materials, and the materials are cooled to form a cylindrical mulching film; in addition, the cylindrical mulching film is consist of three strips, wherein, the three strips are in different compositions respectively, i.e., the strips are made of three different materials A, B, and C, respectively; therefore, a mulching film in ABC form can be produced ultimately.

## Claims

1. A die for film-blowing machine, comprising a main body, an annular die port fitted to the main body, and a central hole running through the main body and the annular die port, wherein, the main body comprises feed ports and main flow channels that are located inside the main body for communicating the feed ports with the annular die port; **characterized in that**, a plurality of feed ports are arranged, and each of the feed ports is communicated with one or more main flow channels; the main flow channels communicated with the different feed ports are communicated with different regions of the annular die port; the regions of the annular die port are distributed in the circumferential direction of the annular die port, and the cross sections of the regions of the annular die port are in shapes of sectorial annularity.

2. The die for film-blowing machine according to claim 1, wherein, 2-6 feed ports are used.

3. The die for film-blowing machine according to claim 1, wherein, the die further comprises an annular flow channel located between the main flow channels and the annular die port, and the main flow channels communicated with the different feed ports are communicated with different regions of the annular flow channel; the regions of the annular flow channel are distributed in the circumferential direction of the annular flow channel, and the cross sections of the regions of the annular flow channel are in shapes of sectorial annularity; the regions of the annular flow channel are corresponding to the regions of the annular die port respectively, and the main flow channels communicated with the different feed ports are communicated with the different regions of the annular die port through the annular flow channel.

4. The die for film-blowing machine according to claim 3, wherein, the cross sectional area of each region of the annular flow channel communicated with the different feed ports is no greater than 90% of the cross sectional area of the entire annular flow channel, and/or the cross sectional area of each region of the annular die port communicated with the different feed ports is no greater than 90% of the cross sectional area of the entire annular die port.

5. The die for film-blowing machine according to claim 3, wherein, the main flow channels communicated with the same feed port are communicated with the different regions of the annular flow channel and/or annular die port.

6. The die for film-blowing machine according to claim 5, wherein, the regions of the annular flow channel communicated with the different feed ports are alternated arranged, and/or the regions of the annular die port communicated with the different feed ports are alternated arranged.

7. The die for film-blowing machine according to claim 3, wherein, the depth of the annular flow channel is 0-1/2 of the total height of the main body.

8. The die for film-blowing machine according to claim 3, wherein, a plurality of branch flow channels are arranged at the end of the main flow channels near the annular die port or annular flow channel, and the branch flow channels are communicated the main flow channels with the annular die port or annular flow channel.

9. The die for film-blowing machine according to claim 8, wherein, the main flow channels are tubular or curved fan-shaped flow channels, and the branch flow channels are tubular or curved fan-shaped flow channels.

10. A film-blowing machine, comprising a die and a plurality of screw extruders, wherein, each of the screw extruders comprises a drive unit, a feeding unit, an extruding screw, and a discharge port, **characterized in that** the die is the die according to any one of claims 1-9, and the discharge port of each screw extruder is communicated with one feed port of the die.

## Amended claims

### Amended claims under Art. 19.1 PCT

**1.** A die for film-blowing machine, comprising a main body, an annular die port fitted to the main body, and a central hole running through the main body and the annular die port, wherein, the main body comprises feed ports and main flow channels that are located inside the main body for communicating the feed ports with the annular die port; **characterized in that**, a plurality of feed ports are arranged, each of the feed ports is communicated with one or more main flow channels, and the main body further comprises an annular flow channel or branch flow channels located between the main flow channels and the annular die port; wherein, the main flow channels communicated with the different feed ports are communicated with different regions of the annular flow channel, the regions of the annular flow channel are distributed in the circumferential direction of the annular flow channel, and the cross sections of the regions of the annular flow channel are in shapes of sectorial annularity; or, the branch flow channels communicated with the main flow channels that are communicated with the different feed ports are communicated with different regions of the annular die port, the regions of the annular die port are distributed in the circumferential direction of the annular die port, and the cross sections of the regions of the annular die port are in shapes of sectorial annularity.

**2.** The die for film-blowing machine according to claim 1, wherein, 2-6 feed ports are used.

**3.** The die for film-blowing machine according to claim 1, wherein, the cross sectional area of each region of the annular flow channel or annular die port communicated with the different feed ports is no greater than 90% of the cross sectional area of the entire annular flow channel or annular die port.

**4.** The die for film-blowing machine according to claim 1, wherein, the main flow channels communicated with the same feed port are communicated with the different regions of the annular flow channel, or, the branch flow channels communicated with the main flow channels that are communicated with the same feed port are communicated with the different regions of the annular die port.

**5.** The die for film-blowing machine according to claim 4, wherein, the regions of the annular flow channel communicated with the different feed ports are alternated arranged, or, the regions of the annular die port communicated with the different feed ports are alternated arranged.

**6.** A die for film-blowing machine, comprising a main body, an annular die port fitted to the main body, and a central hole running through the main body and the annular die port, wherein, the main body comprises feed ports and main flow channels that are located inside the main body for communicating the feed ports with the annular die port; **characterized in that**, a plurality of feed ports are arranged, each of the feed ports is communicated with one or more main flow channels, and the main body further comprises branch flow channels and an annular flow channel located between the main flow channels and the annular die port in sequence; wherein, the branch flow channels communicated with the main flow channels that are communicated with the different feed ports are communicated with the different regions of the annular flow channel, and the regions of the annular flow channel are distributed in the circumferential direction of the annular flow channel, and the cross sections of the regions of the annular flow channel are in shapes of sectorial annularity.

**7.** The die for film-blowing machine according to claim 6, wherein, the branch flow channels communicated with the main flow channels that are communicated with the same feed port are communicated with the different regions of the annular flow channel.

**8.** The die for film-blowing machine according to claim 7, wherein, the regions of the annular flow channel communicated with the different feed ports are alternated arranged.

**9.** The die for film-blowing machine according to claim 6, wherein, the main flow channels are tubular or curved fan-shaped flow channels, and the branch flow channels are tubular or curved fan-shaped flow channels.

**10.** A film-blowing machine, comprising a die and a plurality of screw extruders, wherein, each of the screw extruders comprises a drive unit, a feeding unit, an extruding screw, and a discharge port; **characterized in that**, the die is the die according to any one of claims 1-9, and the discharge port of each screw extruder is communicated with one feed port of the die.

## Amended claims

### Amended claims under Art. 19.1 PCT

Claims 1, 3-9 are replaced with amended claims with the same number; claims 2 and 10 are unchanged. The purpose of these amendments is to limit the scope of the claimed invention. These amendments should have no effect on the description and drawings.
